# EUROPEAN PATENT SPECIFICATION

(11) **EP 4 325 662 B1**
(45) Date of publication and mention of the grant of the patent: **03.09.2025**
(21) Application number: 23800721.5
(22) Date of filing: 26.04.2023
(51) Int. Cl.: H01Q 1/24, H01Q 13/10, H01Q 7/00, H01Q 9/04, H01Q 9/42, H01Q 5/321

(54) **TERMINAL ANTENNA AND ELECTRONIC DEVICE**
ENDGERÄTEANTENNE UND ELEKTRONISCHE VORRICHTUNG
ANTENNE DE TERMINAL ET DISPOSITIF ÉLECTRONIQUE

(30) Priority: 09.06.2022 CN 202210648306
(43) Date of publication of application: 21.02.2024
(73) Proprietor: Honor Device Co., Ltd., Shenzhen, Guangdong 518040 (CN)
(72) Inventor: HU, Yiwu, Shenzhen, Guangdong 518040 (CN); ZHANG, Aofang, Shenzhen, Guangdong 518040 (CN); CHU, Shaojie, Shenzhen, Guangdong 518040 (CN); WEI, Kunpeng, Shenzhen, Guangdong 518040 (CN)
(74) Representative: Epping - Hermann - Fischer
(86) International application number: PCT/CN2023/091004
(87) International publication number: WO 2023/236677

(56) References cited:
- CN-A- 102 683 828
- CN-A- 104 412 450
- CN-A- 113 594 697
- CN-A- 114 566 785
- CN-A- 114 744 397
- US-A1- 2012 001 815
- US-A1- 2012 001 815
- US-A1- 2012 229 357
- US-A1- 2018 026 344
- US-B2- 11 038 256

## Description

### TECHNICAL FIELD

This application relates to the field of antenna technologies, and in particular, to a terminal antenna and an electronic device.

### BACKGROUND

An electronic device may implement a wireless communication function through an antenna provided therein. Other metal components (or electronic components) in the electronic device may affect the antenna.

For example, in a case that the electronic device is provided with an all-metal back cover and a display screen having a high screen-to-body ratio, the antenna can radiate only through a gap between a display region of the display screen and the back cover. This leads to the problems of non-uniform gain distribution and poor radiation performance.

US 2012/229357 A1 dislcoses an unbalanced antenna including a non-conductive substrate having one short edge, and two long edges connected respectively to two opposite ends of the short edge and parallel to each other, and an unbalanced antenna disposed proximate to the short edge of the non-conductive substrate and having a ground portion. A ground plane has side edges extending along the long edges of the non-conductive substrate, and is electrically coupled with the ground portion. The length of the ground plane is longer than a quarter of an equivalent wavelength corresponding to an operating frequency of the unbalanced antenna. A pair of choke sleeve structures are symmetrically disposed at opposite sides of the ground plane and spaced apart from the unbalanced antenna by a quarter of an equivalent wavelength corresponding to the operating frequency. Each choke sleeve structure has one end connected to the ground plane, and the other end extending in a direction away from the unbalanced antenna.

US 2012/001815 A1 discloses a multiband antenna having a ground plane and a radiating portion. The radiating portion includes a first metal portion, a second metal portion, an inductively-coupled portion and a third metal portion. The first metal portion has a first coupling metal portion and a signal feeding line electrically connected thereto. The second metal portion has a second coupling metal portion and a shorting metal portion electrically connected thereto with a shorting point connected to the ground plane. The first and second coupling metal portions are coupled and a capacitively-coupled portion is formed therebetween. The inductively-coupled portion is connected between the third and second metal portions. The first and second metal portions enable the antenna to generate a first operating band. The first, second and third metal portions enable the antenna to generate a second operating band, the frequencies of which are lower than those of the first operating band.

US 11 038 256 B2 discloses an antenna structure including a metal housing, a first radiator, and an isolating portion. The metal housing includes a front frame, a backboard, and a side frame. The side frame is positioned between the front frame and the backboard. The side frame defines a slot and the front frame defines a gap. The gap communicates with the slot and extends across the front frame. The metal housing is divided into at least a long portion and a short portion by the slot and the gap. The first radiator is positioned adjacent to the short portion. The isolating portion is connected to the first radiator to improve isolation between the short portion and the first radiator.

### SUMMARY

Embodiments of this application provide a terminal antenna and an electronic device, by adding a choke structure near a common antenna scheme (for example, an MNG antenna), optimization of a maximum gain of an original antenna is implemented, and meanwhile an overall radiation performance of the antenna is improved.

To achieve the foregoing objective, the following technical solutions are used in the embodiments of this application:
According to a first aspect, a terminal antenna is provided. The terminal antenna is disposed in an electronic device, and the terminal antenna includes: a first radiator and a second radiator. A first end of the first radiator is provided with a feed, and a second end of the first radiator is connected to a reference ground. The first radiator is provided with a gap that runs through the first radiator, the gap is in an interdigitated structure, and there are at least two gaps. The second radiator is arranged on a side of the first radiator, the second radiator is L-shaped, the second radiator and the reference ground enclose an inverted L-shaped first gap, and a non-open end of the first gap is close to the first radiator. In this example, for example, a choke structure is added near an MNG antenna. By disposing the choke structure, a traveling wave current generated by the MNG antenna is suppressed, so as to reduce a maximum gain of the MNG antenna. Hence, it is possible to increase a conduction power of the antenna. In addition, the gap can radiate autonomously, and therefore a radiation performance of the MNG antenna can be improved.

In some designs, a length of the first gap is determined according to a ¼ wavelength of an operating frequency band of the terminal antenna. In this way, by defining the length of the first gap, the choke structure can effectively suppress the traveling wave current, and meanwhile radiation based on a ¼ wavelength mode can be performed.

A total length of the first radiator and the second radiator does not exceed a 1/2 wavelength of an operating frequency band of the terminal antenna. In this way, a distance from the first gap to the first radiator is limited, so that the choke structure does not be excessively far away from the first radiator, which can effectively and significantly suppress the traveling wave current.

The second radiator is at a first end or a second end of the first radiator, and is connected to the first radiator; or, the second radiator is separated from the first radiator by a second gap. In this way, two possible implementations of the choke structure are provided. For example, a radiator of the choke structure may be connected to the first radiator. Still for example, a radiator of the choke structure may be independent of the first radiator.

In some designs, during operation of the terminal antenna, a zero-order mode excited by the first radiator corresponds to a first resonance, a ¼ mode excited by the first gap corresponds to a second resonance, the second resonance at least partially coincides with the first resonance, and a central frequency point of the second resonance is lower than the first resonance. In this way, by exciting autonomous radiation of the first gap, the first resonance can be supplemented in bandwidth and efficiency, so as to improve the overall radiation performance of the antenna.

In a case that the second radiator is separated from the first radiator by the second gap, a smaller width (L3) of the second gap indicates a higher efficiency of the terminal antenna in the operating frequency band. In this way, in a case that the two radiators are disposed independent of each other, the radiation performance of the antenna can be effectively improved by properly setting the width of the second gap.

In some designs, the second radiator is configured to suppress a traveling wave current generated on the reference ground along a direction from the first radiator to the second radiator during operation of the first radiator. In this way, an example of the effect of optimizing the maximum gain of the antenna by using the choke structure is provided.

In some designs, the terminal antenna further includes a third radiator, the third radiator and the second radiator are respectively disposed on two sides of the first radiator, the third radiator and the reference ground enclose an inverted L-shaped third gap, and a non-open end of the third gap is disposed close to the first radiator. In this way, choke structures can be provided on two sides of the antenna, so as to suppress traveling wave currents on two sides, thereby reducing the maximum gain of the antenna, and improving the radiation performance.

In some designs, the third gap and the first gap are disposed asymmetrically with respect to the first radiator. In this way, an example of disposing choke structures on two sides is provided, for example, being disposed in a mirror manner relative to an original antenna.

A total length of the third radiator, the first radiator, and the second radiator does not exceed a ½ wavelength of an operating frequency band of the terminal antenna. In this way, a restraint on the total length of the antenna in a case that choke structures are provided on two sides is provided, so that the two choke structures can effectively perform suppression of the traveling wave currents.

According to a second aspect, not encompassed by the wording of the claims but considered as useful for understanding the invention, a terminal antenna is provided. The terminal antenna is disposed in an electronic device, and the terminal antenna includes: a first radiator and a second radiator. A first end of the first radiator is provided with a feed, a second end of the first radiator is suspended, and the first radiator is provided with a grounding point at a position near the first end; or, a first end of the first radiator is provided with a grounding point, a second end of the first radiator is suspended, and the first radiator is provided with a feed at a position near the first end. The second radiator is arranged on a side of the first radiator, the second radiator is L-shaped, the second radiator and the reference ground enclose an inverted L-shaped first gap, and a non-open end of the first gap is close to the first radiator. In the solution provided in the first aspect, for example, a choke structure is arranged on one side or choke structures are arranged on two sides of the MNG antenna. In this example, a choke structure may alternatively be arranged near an IFA antenna. In other designs of this example, disposition of the choke structure can alternatively refer to the solution provided in the possible designs of the first aspect, and effects that can be achieved are similar.

According to a third aspect, not encompassed by the wording of the claims but considered as useful for understanding the invention, a terminal antenna is provided. The terminal antenna is disposed in an electronic device, and the terminal antenna includes: a first radiator and a second radiator. A first end of the first radiator is provided with a feed, and a left-handed capacitor is arranged between the feed and the first radiator. A second end of the first radiator is grounded. The second radiator is arranged on a side of the first radiator, the second radiator is L-shaped, the second radiator and the reference ground enclose an inverted L-shaped first gap, and a non-open end of the first gap is close to the first radiator. In this example, an example in which a choke structure is arranged near a left-handed antenna is provided. In other designs of this example, disposition of the choke structure can alternatively refer to the solution provided in the possible designs of the first aspect, and effects that can be achieved are similar.

According to a fourth aspect, not encompassed by the wording of the claims but considered as useful for understanding the invention, a terminal antenna is provided. The terminal antenna is disposed in an electronic device, and the terminal antenna includes: a first radiator and a second radiator. A first end of the first radiator is provided with a feed, and a second end of the first radiator is grounded. The second radiator is arranged on a side of the first radiator, the second radiator is L-shaped, the second radiator and the reference ground enclose an inverted L-shaped first gap, and a non-open end of the first gap is close to the first radiator. In this example, an example in which a choke structure is arranged near a loop antenna is provided. In other designs of this example, disposition of the choke structure can alternatively refer to the solution provided in the possible designs of the first aspect, and effects that can be achieved are similar.

According to a fifth aspect, an electronic device is provided. The electronic device includes an all-metal back housing, the all-metal back housing is provided with a window structure, and the terminal antenna according to the first aspect, is disposed in the window structure.

In some designs, the window structure is disposed on a long edge of the electronic device. In this way, the antenna may be disposed on the long edge of the electronic device, so as to better excite ground to perform radiation, to obtain a better radiation performance.

It is to be understood that the technical features of the technical solution provided in the fifth aspect above can all correspond to the terminal antenna according to the first aspect to the fourth aspect and any possible designs thereof, so the similar beneficial effects can be achieved. Details are not described herein again.

### BRIEF DESCRIPTION OF DRAWINGS

FIG. 1 is a schematic diagram of interaction of a plurality of electronic devices;
FIG. 2 is a schematic composition diagram of a tablet computer;
FIG. 3 is a schematic operation diagram of a tablet computer in which an antenna is disposed;
FIG. 4 is a schematic composition diagram of an electronic device according to an embodiment of this application;
FIG. 5 is a schematic diagram of an all-metal back housing provided with a window structure according to an embodiment of this application;
FIG. 6 is a schematic composition diagram of an antenna according to an embodiment of this application;
FIG. 7 is a schematic diagram of currents during operation of an antenna according to an embodiment of this application;
FIG. 8 is a schematic simulation diagram of an S-parameter according to an embodiment of this application;
FIG. 9 is a schematic diagram of a distribution of traveling wave currents during operation of an MNG antenna according to an embodiment of this application;
FIG. 10 is a schematic diagram of a distribution of currents after choke structure is disposed according to an embodiment of this application;
FIG. 11 is a schematic comparison diagram of direction patterns according to an embodiment of this application;
FIG. 12 is a schematic simulation and comparison diagram of an S-parameter according to an embodiment of this application;
FIG. 13 is a schematic composition diagram of an antenna according to an embodiment of this application;
FIG. 14 is a schematic comparison diagram of direction patterns according to an embodiment of this application;
FIG. 15 is a schematic comparison diagram of direction patterns according to an embodiment of this application;
FIG. 16 is a schematic comparison diagram of direction patterns according to an embodiment of this application;
FIG. 17 is a schematic simulation and comparison diagram of an S-parameter according to an embodiment of this application;
FIG. 18 a schematic diagram of a distribution of currents corresponding to different choke structures according to an embodiment of this application;
FIG. 19 is a schematic comparison diagram of direction patterns according to an embodiment of this application;
FIG. 20 is a schematic simulation and comparison diagram of an S-parameter according to an embodiment of this application;
FIG. 21 is a schematic composition diagram of an antenna according to an embodiment of this application;
FIG. 22 is a schematic comparison diagram of direction patterns according to an embodiment of this application;
FIG. 23 is a schematic composition diagram of an antenna according to an embodiment of this application;
FIG. 24 is a schematic comparison diagram of direction patterns according to an embodiment of this application;
FIG. 25 is a schematic composition diagram of an antenna according to an embodiment of this application;
FIG. 26 is a schematic comparison diagram of direction patterns according to an embodiment of this application;
FIG. 27 is a schematic composition diagram of an antenna according to an embodiment of this application; and
FIG. 28 is a schematic composition diagram of an antenna according to an embodiment of this application.

### DESCRIPTION OF EMBODIMENTS

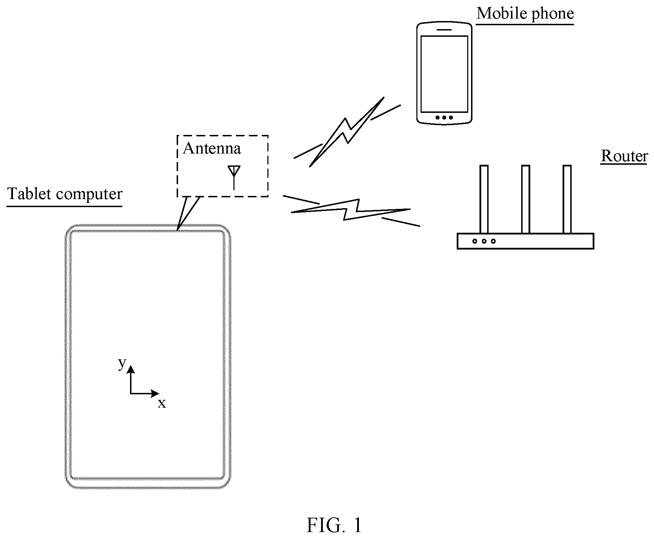

An electronic device implements wireless communication with other devices through an antenna provided therein. Exemplarily, referring to FIG. 1, for example, a tablet computer is communicated with another device. The tablet computer may establish a wireless communication connection with an electronic device such as a mobile phone or a router by using an antenna provided therein.

At present, with the development of electronic devices, the appearance is gradually developing in the direction of metallization, high screen-to-body ratio, and thinness.

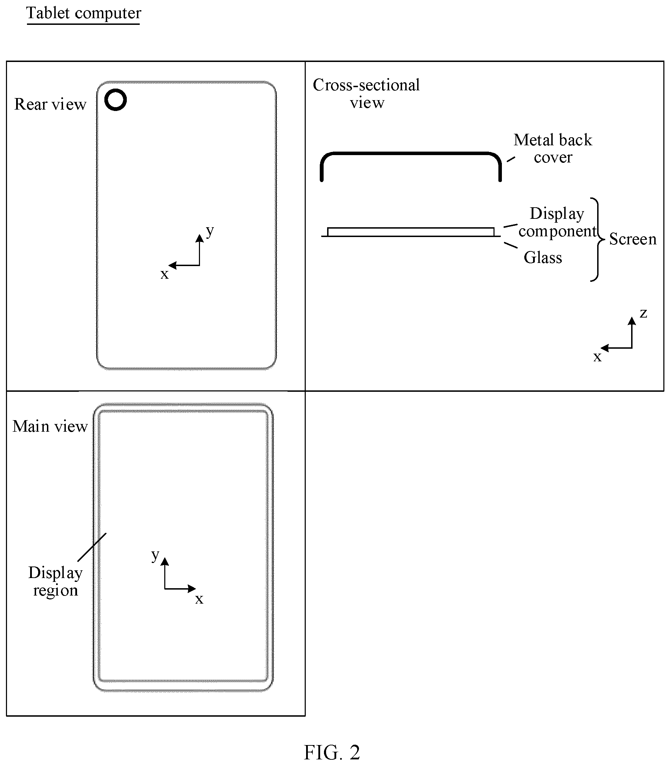

Exemplarily, FIG. 2 is a schematic diagram of a tablet computer. As shown in FIG. 2, from a rear view, the tablet computer may be covered by a back cover made of a metal material. The back cover may be provided with an opening, to leave room for a rear-facing camera of the tablet computer. In this application, the metal back cover that fully wraps the tablet computer may be referred to as an all-metal back cover.

In some implementations, for example, in a cross-sectional view shown in FIG. 2, the all-metal back cover may wrap side surfaces of the tablet computer in addition to covering a back portion of the tablet computer, so that the tablet computer acquires a better structural strength and metal appearance characteristics. A display screen may snap into the all-metal back cover, so as to provide a display function on the front of the tablet computer for a user. In some implementations, the display screen may be a display screen having a high screen-to-body ratio.

From the perspective of the main view, a display region corresponding to the display component may occupy most regions of the tablet computer.

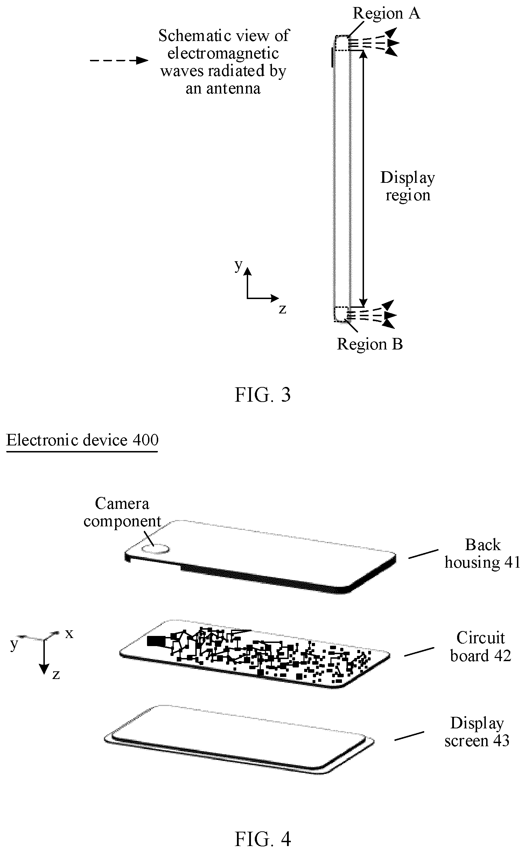

With reference to the description of FIG. 1, an antenna may be disposed in the tablet computer for implementing a wireless communication function thereof. In combination with the example in FIG. 2, due that the all-metal back cover blocks electromagnetic waves and that the display component in the display screen has a significant influence on transmission of the electromagnetic waves, as shown in FIG. 3, an antenna in the structure shown in FIG. 2 is most frequently disposed in a region A and a region B shown in FIG. 3. Corresponding to the schematic diagram of the front view shown in FIG. 2, the region A and the region B may be regions where non-display regions are projected on the tablet computer.

Then, during operation, the antenna radiates electromagnetic waves outward through the non-display regions of the front of the tablet computer, so as to support the wireless communication function of the tablet computer.

It should be understood that, for the requirement of high screen-to-body ratio, the display component occupies a quite large proportion in the region of the front projection of the tablet computer, and correspondingly the non-display regions are relatively small. Therefore, a disposition space (for example, the region A and the region B) provided for the antenna in the tablet computer is also quite limited. Plus the influence of the all-metal back cover, the radiation performance of the antenna is insufficient.

In addition, due that the antenna can radiate electromagnetic waves only through the non-display region during operation, radiation directions of electromagnetic waves are quite concentrated, and correspondingly, gains of the antenna during operation are abnormally prominent in some directions (electromagnetic wave radiation directions shown in FIG. 3), and are insufficient in other directions. As a result, an isotropic characteristic of the antenna is quite poor, and the wireless communication function of the tablet computer cannot be supported at directions other than directions having locally high gains.

For example, the antenna operates in a Bluetooth frequency band (or 2.4G WIFI). To protect an antenna related circuit, the local gains need to be ensured not to exceed a limit. In combination with the foregoing description, since the gains of the antenna are locally quite high, correspondingly conduction power provided by a radio frequency end needs to be reduced, so as to avoid the problems of abnormal power spectral density (power spectral density, PSD) or equivalent isotropic radiated power (Equivalent Isotropic Radiated Power, EIRP) incurred in the high gain directions.

However, after the conduction power is reduced, a signal radiation intensity in low gain directions of the antenna is weaker. This also results in an overall reduction in a radiation capacity of the antenna.

Based on the foregoing description, in a case that the current antenna scheme is applied to an electronic device provided with an all-metal back cover, a problem that the antenna radiation performance is significantly insufficient due to an excessively high local gain may occur. In addition, the influence of the all-metal back cover on the antenna is more prominent, and the radiation performance of the antenna is further affected. In the following description, distribution of the gains in all of the directions in an antenna radiation process may be identified by a maximum gain of the antenna. For example, a greater maximum gain corresponds to a worse corresponding directivity and to a worse overall radiation performance of the antenna. Correspondingly, a smaller maximum gain corresponds to a more balanced gain distribution in another corresponding direction and to a better overall radiation performance of the antenna.

To solve the foregoing problem, an embodiment of this application provides an antenna scheme, which can effectively reduce the maximum gain of the antenna, so as to improve the radiation performance of the antenna. In addition, due to the reduction in the maximum gain, PSD and EIRP abnormalies can be controlled under a relatively high conduction power, and therefore the antenna can receive a greater conduction power, thereby further improving the radiation performance. The solution provided in this embodiment of this application is described below in detail with reference to the accompanying drawings.

The antenna scheme provided in this embodiment of this application can be applied in an electronic device of a user, for supporting a wireless communication function of electronic device. In some embodiments, the electronic device may be provided with an all-metal back housing. For example, the electronic device may be a portable mobile device such as a mobile phone, a tablet computer, a personal digital assistant (personal digital assistant, PDA), an augmented reality (augmented reality, AR)/virtual reality (virtual reality, VR) device, and a media player, or the electronic device may be a wearable electronic device such as a smartwatch. A specific form of the device is not particularly limited in this embodiment of this application.

FIG. 4 is a schematic structural diagram of an electronic device 400 according to an embodiment of this application. For example, the electronic device 400 is a tablet computer. As shown in FIG. 4, the electronic device 400 provided in this embodiment of this application may be sequentially provided with a back housing 41, a circuit board 42, and a display screen 43 from bottom to top (that is, from a back side to a front side) along a z axis.

The back housing 41 may have an all-metal structure. A metal material forming the all-metal structure may include, for example, low-carbon steel, aviation aluminum, high-strength aluminum alloy, stainless steel, and/or titanium alloy. Based on a high strength characteristic of the all-metal structure, the back housing 41 may be used as an appearance surface of a back surface, to provide basic support for the electronic device 400. In some embodiments, the back housing 41 may be provided with an opening, so as to implement a corresponding function in coordination with other components. Exemplarily, in a case that the electronic device 400 is provided with a rear-facing camera, the back housing 41 may be provided with an opening at a position corresponding to the rear-facing camera, so that a camera component (for example, an image acquisition part of the camera) corresponding to the rear-facing camera can extend out of the opening, to implement an image acquisition function. In some implementations, the back housing 41 may further extend from an xoy plane to a side surface (for example, an xoz plane and/or a yoz plane) through a corner, so as to achieve an all-metal wrapped effect. Certainly, in some embodiments, the back housing 41 may alternatively be jointly made of a metal material and a non-metal material. The following description is provided by an example in which the back housing 41 is made of an all-metal material.

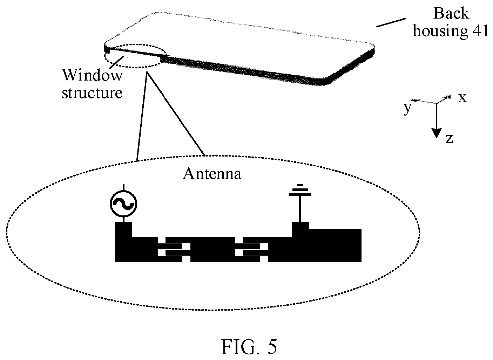

In combination with FIG. 5, in this application, the back housing 41 may be provided with a window structure on a side surface, so as to provide a radiation space on the side surface for an antenna in the window structure. In this way, in a case that a radiator of the antenna is disposed in the window structure, the radiator can radiate to a side surface through the window structure while radiate through the front non-display region, so as to increase the radiation space of the antenna. It should be noted that due to the all-metal structure of the back housing 41, the back housing 41 can provide a large-area zero potential reference. Therefore, the back housing 41 may also be used as a reference ground for another electronic component (for example, an antenna, a radio frequency component, or another electronic component).

Still in combination with FIG. 4, the electronic device 400 in this application may further be provided with an internal component such as a circuit board 42. The circuit board 42 may be prepared from a printed circuit board (Printed Circuit Board, PCB) and/or a flexible circuit board (Flexible Printed Circuit Board, FPC). In a different implementation, there may be one or more circuit boards 42. The circuit board 42 may be used as a bearing structure for electronic components, and interconnection between the electronic components is implemented by providing signal transmission lines between the electronic components on the circuit board 42, so as to ensure operation of the electronic components.

Exemplarily, the circuit board 42 may be provided with a processor. The processor may include one or more processing units. For example: the processor may include, for example, an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be separate devices, or may be integrated into one or more processors. The processor may generate an operating control signal according to an instruction operation code and a sequence signal, to complete control of fetching and executing an instruction. The processor may be further provided with a memory, configured to store instructions and data. In some embodiments, the memory in the processor is a cache memory. The memory may store instructions or data that are used or used more frequently by the processor. If the processor needs to use the instructions or data, the instructions or data can be called directly from the memory. This avoids repeated access, and reduces a waiting time of the processor, thereby improving the system efficiency. In some embodiments, the processor may be a microprocessor unit (Microprocessor Unit, MPU) or a Microcontroller Unit (Microcontroller Unit, MCU).

A communication module such as a radio frequency module may also be disposed on the circuit board 42. The radio frequency module is connected to a baseband processor through a baseband line, and the radio frequency module may be further connected to an antenna, so as to implement a wireless communication function. Exemplarily, during transmission of a signal, a baseband processor sends a digital signal to a radio frequency module through the baseband line, and the radio frequency module converts and processes the digital signal, to obtain a corresponding analog signal. The radio frequency module transmits the analog signal to the antenna, so that the antenna converts the analog signal into an electromagnetic wave to radiate. During signal reception, the antenna converts the electromagnetic wave into an analog signal carrying information and transmits the analog signal to the radio frequency module. The radio frequency module converts the analog signal into a digital signal after performing radio frequency domain processing, and transmits the digital signal to the baseband processor. The baseband processor parses the digital signal, to obtain information carried in the received signal.

Still in combination with FIG. 4, the electronic device 400 in this application may further be provided with a display screen 43. The display screen 43 may be configured to provide a display function to a user. In some implementations, the display screen 43 may be mounted on a side portion of the back housing 41, to obtain an overall appearance of the electronic device 400. Exemplarily, in combination with the example in FIG. 2, the display screen 43 includes appearance glass and a display component (or referred to as a display panel). The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flex light-emitting diode (flex light-emitting diode, FLED), a mini LED, a micro LED, a micro-OLED, a quantum dot light emitting diode (quantum dot light emitting diode, QLED), or the like. In some embodiments, the electronic device 400 may include one or more display screens 43.

In this application, an antenna may be further provided between the circuit board 42 and the back housing 41. In different implementations, specific implementations of the antenna may be different. For example, the radiator of the antenna may be disposed on the circuit board 42, to implement a PCB antenna. Still for example, the antenna may alternatively be implemented by attaching the same to an antenna support by using an FPC. Still for example, in combination with FIG. 5, an antenna support connected to the back housing 41 or a separate antenna may be disposed in the window structure, and an antenna radiator is etched on the antenna support through a laser direct structuring (Laser Direct Structuring, LDS) process. For another example, in the window structure as shown in FIG. 5, an injection-molded metal strip may be used as a radiator of the antenna, which is implemented in a manner such as a metalframe diecasting for anodicoxidation (Metalframe Diecasting for Anodicoxidation, MDA) process. Alternatively, the antenna scheme may be obtained in combination with the foregoing at least two implementations. A specific implementation of a magnetic flow loop monopole antenna is not limited in this embodiment of this application. The structure and the operating state of the antenna provided in this embodiment of this application are described below with reference to the accompanying drawings.

It should be noted that in this application, for example, the electronic device 400 is a tablet computer that supports WLAN only, an operating frequency band of the antenna disposed in tablet computer may include, for example, Bluetooth and a WIFI frequency band near 2.4 GHz, and/or a WIFI frequency band near 5 GHz. In some other embodiments, the operating frequency band of the antenna in the electronic device 400 may further include other frequency bands, which is not described herein again.

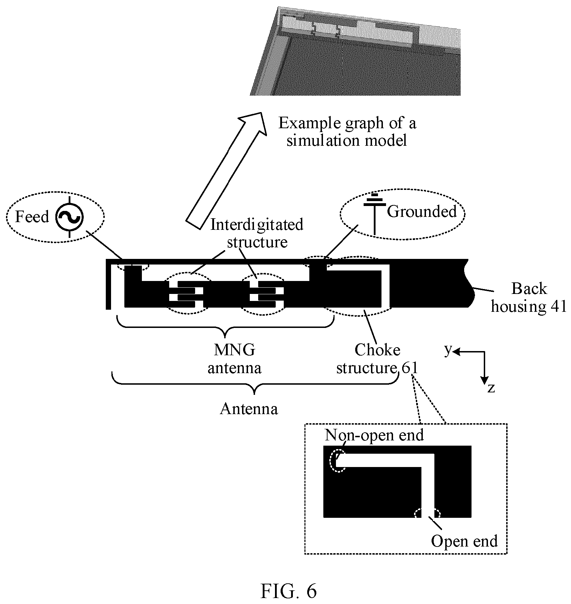

FIG. 6 is a schematic diagram of an antenna scheme according to an embodiment of this application.

In this example, the antenna may include a main radiation structure and a choke structure 61. In the example shown in FIG. 6, the main radiation structure may be a magnetic-negative dielectric transmission line (magnetic-negative Transmission Line, MNG-TL, MNG for short) antenna. Exemplarily, the MNG antenna may include a feed and a grounding point that are disposed at two ends of the radiator. At least one interdigitated structure may be connected in series on the radiator. The interdigitated structure may form an effect of distributed capacitance. In other implementations, the interdigitated structure may alternatively be replaced by a lumped capacitive device. By connecting, in series, a capacitor to the radiator, a uniform magnetic field can be formed between the radiator and the reference ground (that is, the back housing 41), so as to obtain an excellent radiation performance in a relatively small space. A specific implementation of the MNG antenna may be referred to in the filed invention patent with patent no. 202111257249.7. It should be noted that in some other embodiments of this application, the main radiation structure may also include other antenna forms, for example, an IFA antenna, or a left-handed antenna. A specific working mechanism thereof may be referred to in the description of this application. It should be noted that in the example of FIG. 6, a ground end of the MNG antenna may be directly connected to the reference ground for grounding. In other implementations, the MNG antenna may also be connected to the reference ground at the ground end (for example, the end close to the choke structure 61 in FIG. 6) through a module such as an electric connection component/structure or a matching and tuning component.

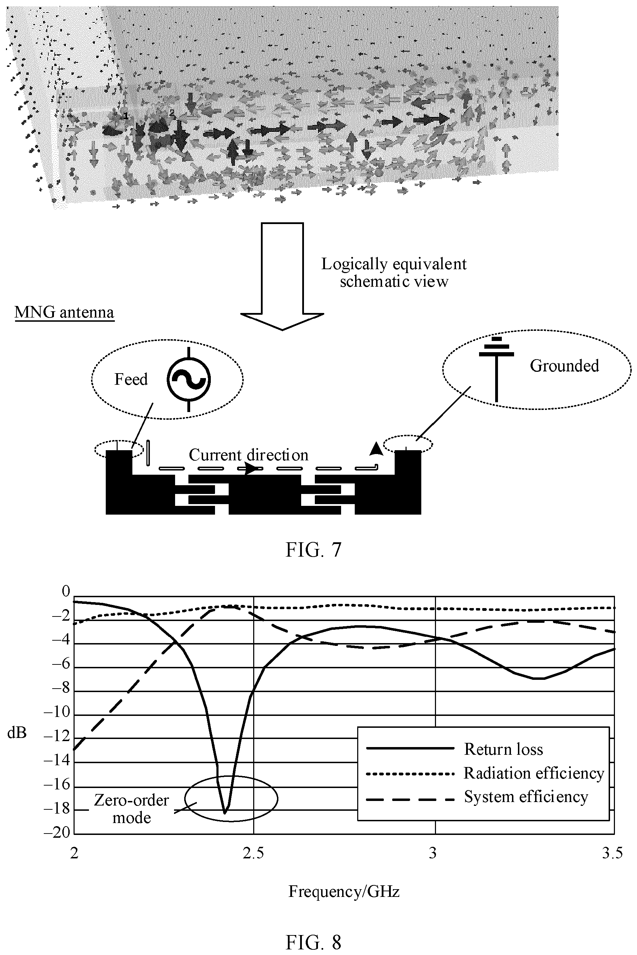

In an example, FIG. 7 and FIG. 8 illustrate states of the MNG antenna during operation. FIG. 7 shows a current distribution state of the MNG antenna during operation. It can be seen that currents in a same direction may be distributed on the radiator, and amplitudes of the currents are substantially the same at positions (for example, positions close to a feed or close to a grounding point) of the radiator. Therefore, a magnetic field corresponding to the currents may be distributed between the radiator and the back housing 41 in a manner of having a uniform distribution characteristic. In the following description, an operating mode corresponding to the uniform current/magnetic field may also be referred to as a zero-order mode. In some implementations, the zero-order mode may also be used as a main mode to cover the operating frequency band of the antenna provided in the embodiments of this application. For example, the zero-order mode may be used for covering a 2.4 GHz WIFI frequency band (for example, 2.3 Ghz-2.4 GHz).

FIG. 8 shows a schematic simulation diagram of an S-parameter of the MNG antenna during operation. From the perspective of return loss (S11), it can be seen that a deepest point of resonance corresponding to the zero-order mode has reached -18 dB, and the bandwidth is sufficient to cover the 2.4 GHz frequency band. From the perspective of the radiation efficiency, an all-frequency band radiation efficiency is above -2 dB. Due that the radiation efficiency may be used for identifying a highest radiation performance that can be achieved in a case that all frequency bands of the current antenna are completely matched, the MNG antenna has a good radiation potential. A better radiation performance can be obtained only by adjusting port matching to cover the operating frequency band of the excited resonance. From the perspective of the system efficiency, in a case that a current port is matched, a peak efficiency of the frequency band near 2.4 GHz is close to -2 dB. Therefore, through simulation shown in FIG. 8, it can be seen that the MNG antenna in the antenna structure shown in FIG. 6 can effectively cover the operating frequency band.

In combination with the foregoing description, due to the structural feature of the all-metal back cover, the local gain of the antenna is excessively high. In this example, the problem can be solved by using the choke structure 61 disposed in the antenna.

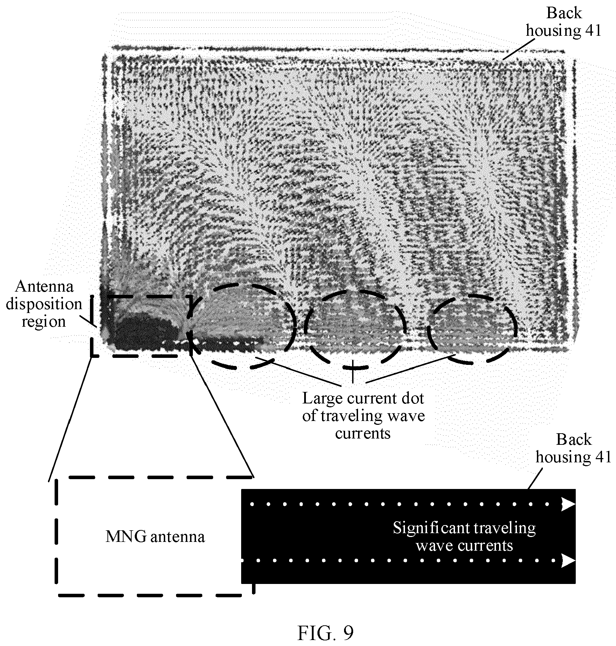

Exemplarily, in combination with the example of FIG. 9, for example, an MNG antenna is disposed at a tail end of a long edge of a tablet computer. During operation, the MNG antenna may generate significant traveling wave currents along the long edge of the back housing 41. Distribution of the traveling wave currents may present a characteristic that a plurality of large traveling wave currents and a plurality of small traveling wave currents are alternately distributed according to sizes. From the perspective of the electromagnetic field, the plurality of traveling wave currents that are alternately distributed according to sizes may correspond to an operating state of a high-order mode, which is also one of the reasons for why the local gain is excessively high.

In this application, by disposing the choke structure 61 on a path of the traveling wave currents, so that blocking of the traveling wave currents can be implemented, so that the distribution of currents on the back housing 41 can correspond to an operating state of a fundamental mode, thereby optimizing gains in all of the directions.

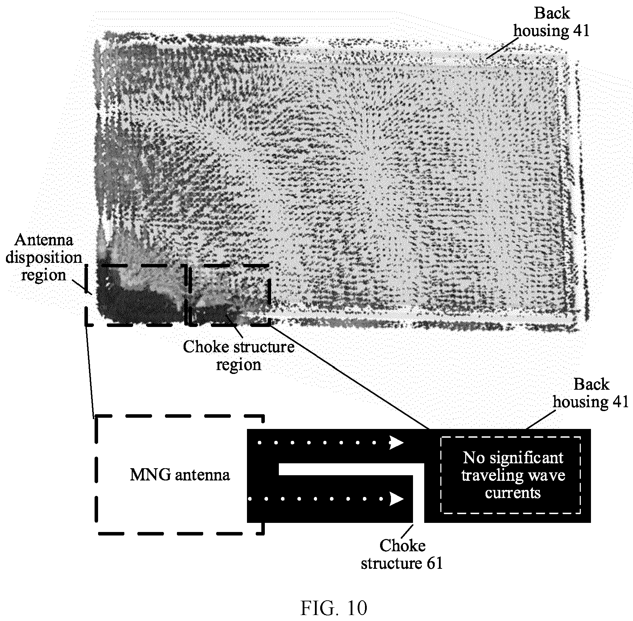

Exemplarily, in combination with FIG. 6, and referring to FIG. 10, one end of the MNG antenna may be provided with a choke structure 61. In this example, the choke structure 61 may include an L-shaped gap. A length of the L-shaped gap may correspond to ¼ of an operating wavelength. As shown in FIG. 10, in this example, the L-shaped gap may be enclosed by an antenna radiator. For example, a radiator is laid at one end of the MNG antenna, and an L-shaped gap is provided on the radiator. The L-shaped gap may include two gaps that are perpendicular to each other. One gap may be parallel to a straight line where the long edge of the back housing 41 is located, and the other gap may be perpendicular to the straight line where the long edge of the back housing 41 is located. The gap perpendicular to the straight line where the long edge of the back housing 41 is located may correspond to an opening on the radiator. The opening may be provided away from the back housing 41. In this application, two tail ends corresponding to the inverted L-shaped gap in the choke structure may correspond to an open end and a non-open end, respectively. Exemplarily, as shown in FIG. 6, in this example, the non-open end may refer to a tail end of an arm, of two arms of the inverted L-shaped gap, parallel to the MNG antenna (or the long edge of the electronic device). It can be seen that the tail end of the non-open end is a closed end of the inverted L-shaped gap. In this example, the non-open end may be disposed close to the MNG antenna. Correspondingly, in this example, the non-open end may refer to a tail end of one arm, of two arms of the inverted L-shaped gap, perpendicular to the MNG antenna (or the long edge of the electronic device). It can be seen that the tail end of the open end may be the opening of the inverted L-shaped gap. In this example, the open end may be disposed away from the MNG antenna.

By providing the choke structure 61 including the L-shaped gap, the traveling wave currents generated by the MNG antenna on the back housing 41 are effectively blocked. In other words, there is no significant distribution of traveling wave currents on the back housing 41 on the side of the choke structure 61 away from the MNG antenna. In some embodiments, a total length of the choke structure 61 and the MNG antenna may not exceed a ½ of an operating wavelength, so that the current distribution on the back housing 41 is closer to the operating state of the fundamental mode, thereby achieving the effect of optimizing the gains in all the directions.

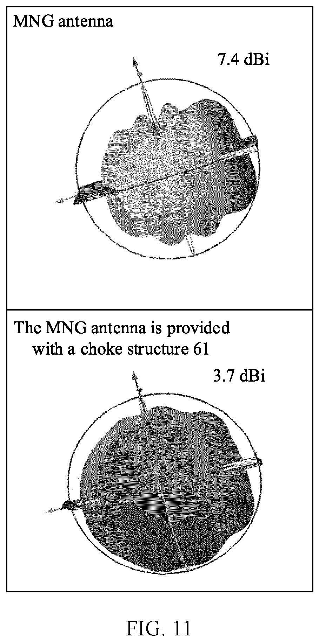

FIG. 11 is a schematic simulation diagram of direction patterns before and after the choke structure 61 is added. A darker color indicates a higher gain in the direction; and on the contrary, a lighter color indicates a smaller gain in the direction. It can be seen that before the choke structure 61 is added, a direction pattern of the antenna presents a fluctuating distribution. The direction pattern may include a plurality of direction recesses, and each recess corresponds to one small current dot of the traveling wave currents. A maximum gain of the antenna before the choke structure 61 is added reaches 7.4 dBi. Correspondingly, after the choke structure 61 is added, the direction pattern of the antenna is close to an apple-shaped distribution. No significant recess is seen in the direction pattern. A corresponding maximum gain is reduced to 3.7 dBi. As shown in the direction pattern after the choke structure 61 is added in FIG. 11, the gains in all the directions are relatively close. Therefore, gains in other directions can be effectively increased while the maximum gain is reduced, so that the radiation of the antenna is close to isotropic.

In combination with FIG. 6 and FIG. 10. In this example, the choke structure 61 may be included in an antenna radiator, to radiate as part of the antenna. Therefore, the choke structure 61 can further improve the radiation performance of the operating frequency band through radiation of a ¼ wavelength gap mode (or referred to as a slot mode), while optimizing the directivity by suppressing the traveling wave currents. In other words, in this example, the antenna may alternatively be described as: the antenna includes a radiator, one end of the radiator is provided with a feed, and the radiator may be provided with a grounding point. The grounding point divides the radiator into a first part and a second part. The first part and the second part are connected at a grounding point. The first part is a part provided with a feed. The first part may be provided with at least one interdigitated structure. Therefore, the first part forms an MNG antenna to perform radiation. The second part is connected to the back housing 41 (that is, the reference ground) through the grounding point, and the other part of the radiator far away from the first part is suspended. In this way, an L-shaped gap may be enclosed between the second part and the reference ground, which corresponds to the choke structure 61 in this example. It should be understood that a high frequency portion of S11 may also be excited with a loop mode resonance, the operation of which is described in reference to the foregoing filed patent application (202111257249.7). In this example, the grounding point may be disposed at a position close to the second part. In other implementations, locations of the grounding point and the feed may also be replaced with each other, that is, the feed is disposed on the first part at an end close to the second part, and the grounding point is disposed on the first part at an end far away from the second part. Alternatively, from another perspective, the antenna may alternatively be described as: the antenna includes a first radiator and a second radiator connected to each other. Two ends of the first radiator are respectively provided with a feed and a grounding point, and the first radiator is provided with at least one interdigitated structure. The first radiator may correspond to the first part in the foregoing description. The second radiator may correspond to the second part in the foregoing description, and details are not described herein again.

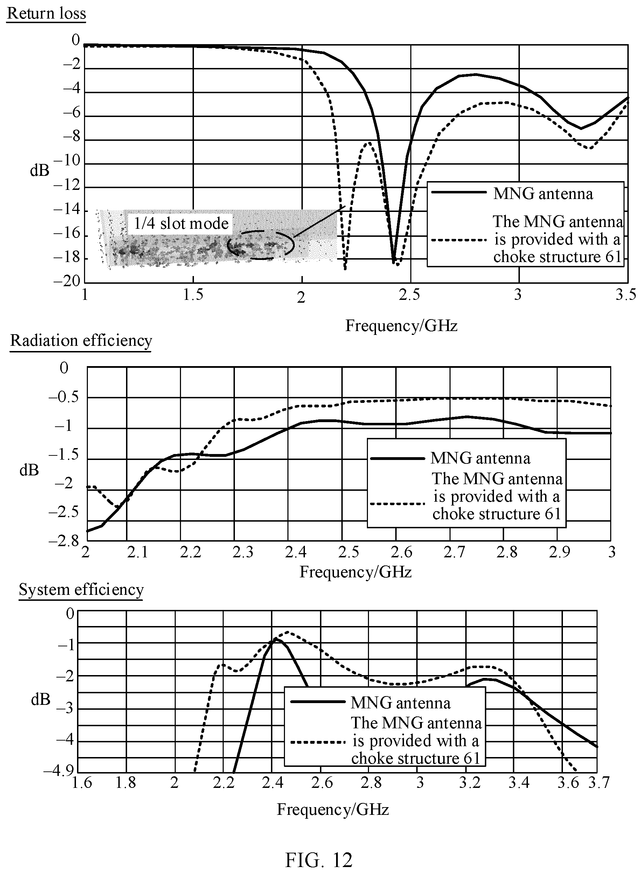

Exemplarily, FIG. 12 is a schematic simulation diagram of an S-parameter during operation of the antenna shown in FIG. 6. As shown in FIG. 12, from the perspective of S11, after the choke structure 61 is added, the bandwidth near 2.4 GHz is significantly improved. In combination with the choke structure 61 described above, after the choke structure 61 is added, optimization of the antenna radiation can be implemented. Specifically, by disposing the choke structure 61, the area of the antenna radiator is increased, which can increase the bandwidth and efficiency of a main resonance. In addition, by disposing the choke structure 61, the current distribution on the reference ground is adjusted, so that the radiation on the reference ground is closer to the fundamental mode. Due to the high-order mode of the radiation performance of the fundamental mode, the antenna performance can also be optimized from the perspective of optimizing the radiation of the reference ground. In addition, the choke structure 61 can generate a resonance as shown in FIG. 12 by exciting a ¼ gap mode, and the resonance may be used for covering the operating frequency band together with the main resonance, thereby optimizing the coverage of the operating frequency band by the antenna radiation.

Still referring to FIG. 12, from the perspective of the radiation efficiency, after the choke structure 61 is added, the radiation efficiency is improved by more than 0.5 dB. From the perspective of the system efficiency, after the choke structure 61 is added, a peak value of the system efficiency is increased by approximately 0.5 dB, and in addition, the bandwidth is significantly improved.

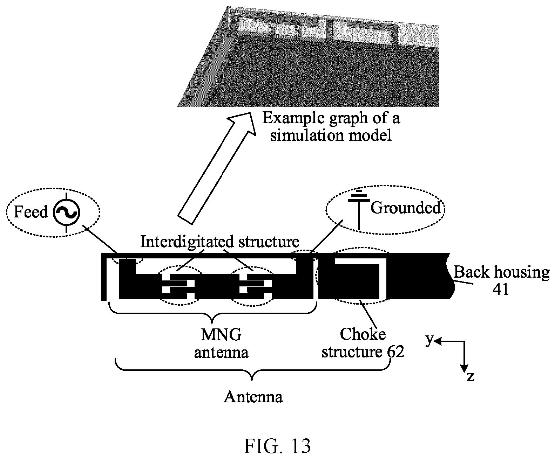

In the descriptions of FIG. 6 to FIG. 12, the second radiator of the choke structure 61 may be disposed in connection with the first radiator of the MNG antenna. In some other implementations of this application, the choke structure may also be disposed independent of the MNG antenna. Exemplarily, FIG. 13 is an example of still another antenna scheme according to an embodiment of this application.

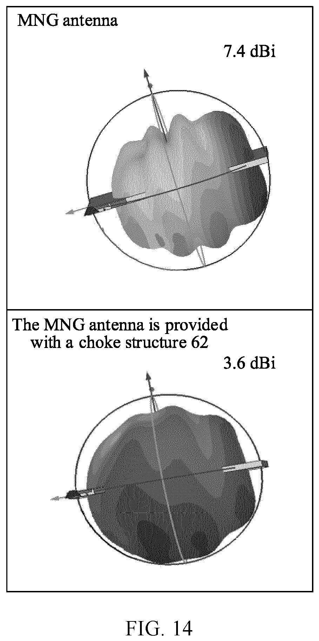

As shown in FIG. 13, a choke structure 62 may be included in the antenna. The choke structure 62 may also include an L-shaped gap. Different from the antenna scheme shown in FIG. 6, the radiator enclosing the L-shaped gap may not be connected to the first radiator of the MNG antenna. Exemplarily, the choke structure 62 may be described as: the antenna is provided with a third radiator which is not connected to the first radiator of the MNG antenna. The third radiator may be disposed at one end of the MNG antenna and separated from one end of the first radiator by a gap. One end of the third radiator close to the MNG antenna is grounded, and one end of the third radiator away from the MNG antenna is suspended. Therefore, effects similar to those in the foregoing examples in FIG. 6 to FIG. 12 can also be achieved. Exemplarily, as shown in FIG. 14, compared with a case before the choke structure 62 is added, after the choke structure 62 is added, the distribution of the direction pattern is more uniform, and the maximum gain is reduced to 3.6 dBi.

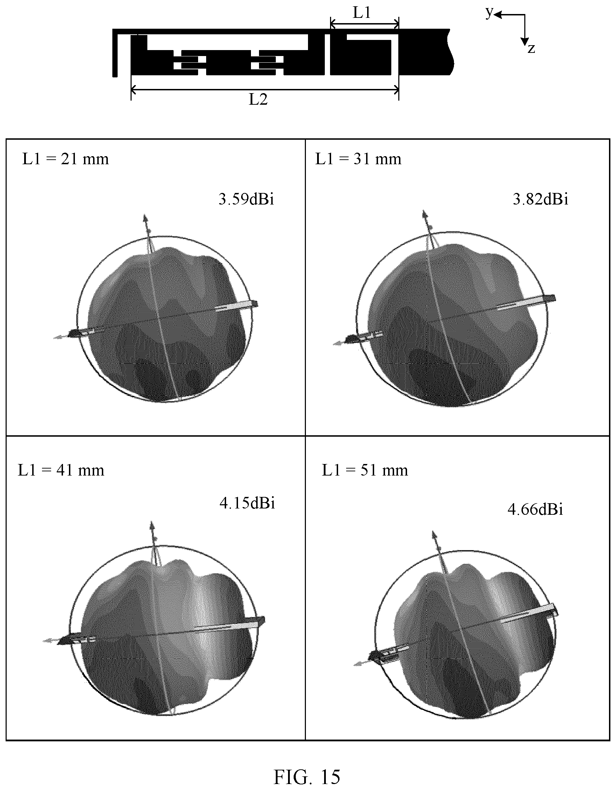

For example, the choke structure 62 and the MNG antenna are separately arranged in FIG. 13, in different implementations, a distance between the choke structure 62 and the MNG antenna may be flexibly adjusted. FIG. 15 is a schematic comparison diagram of direction patterns for different distances between the choke structure 62 and the MNG antenna (that is, L1). Exemplarily, for example, L1 is 21 mm, 31 mm, 41 mm, or 51 mm. It can be seen that a greater L1 indicates a more obvious side lobe in the direction pattern and correspondingly indicates a worse choke effect of the corresponding choke structure 62 on the traveling wave currents. However, even if L = 51 mm, the maximum gain is only 4.66 dBi, which is much smaller than 7.4 dBi before the choke structure is not disposed, as shown in FIG. 11 or FIG. 14.

Therefore, it is proved that, in this application, in a case that the choke structure 62 and the MNG antenna are disposed separately, the distance between the two structures can be flexibly adjusted according to an actual situation, and the effect of optimizing and adjusting the maximum gain can be achieved. In combination with the foregoing description, for an example, an overall length (that is, L2) of the antenna formed by the choke structure 62 and the MNG antenna does not exceed a ½ wavelength of the operating frequency band, and a better radiation effect can be obtained. For example, in a case that the operating frequency band is a frequency band near 2.4 GHz, a relatively good radiation effect can be obtained as long as the overall length (that is, L2) of the antenna formed by the choke structure 62 and the MNG antenna does not exceed 60 mm.

It should be noted that in the example shown in FIG. 15, the method for increasing L1 may be implemented by expanding the area of the third radiator that encloses the choke structure in the direction where the long edge of the tablet computer is located. In the process of increasing L1, the distance between the third radiator and the MNG antenna may remain unchanged. In other words, after the area of the third radiator is increased, the distance between the L-shaped gap and the MNG antenna is farther, and the corresponding choke effect decreases correspondingly.

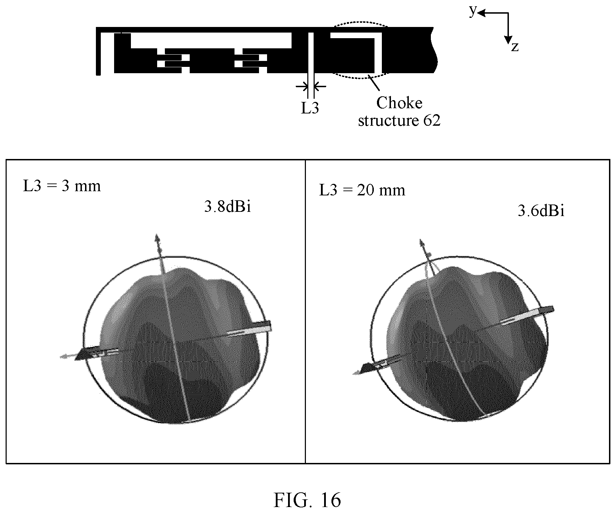

In other implementations, in a case that the area of the third radiator is unchanged, the size of the gap between the third radiator and the first radiator may also be flexibly adjusted. For example, FIG. 16 illustrates a comparison of direction patterns for a gap L3 between the third radiator and the first radiator to be 3 mm and 20 mm, respectively. It can be seen that the maximum gain does not change significantly in both cases.

It should be noted that in the examples of this application, a width of a gap corresponding to the choke structure may be flexibly set, and widths of gaps at different positions may be the same or different. For example, in combination with FIG. 16, the widths of all positions of the choke structure is consistent, and the width of the gap of the choke structure 62 may be in a range of 1 mm to 5 mm. For example, the width of the gap of the choke structure 61/the choke structure 62 in this example or a choke structure in a subsequent embodiment may be set to 2 mm, 3 mm, or 4 mm. For example, the width of the gap of the choke structure is 2 mm, and a corresponding simulation result can be obtained.

In combination with the foregoing descriptions, the choke structure in this application not only optimizes the maximum gain in the antenna, but also improves the radiation effect of the antenna by exciting an additional mode. Then, in the example shown in FIG. 16, after L3 increases, due to that the third radiator is far away from the first radiator, energy coupling is weakened, which is disadvantageous to the effect that the choke structure excites the additional mode.

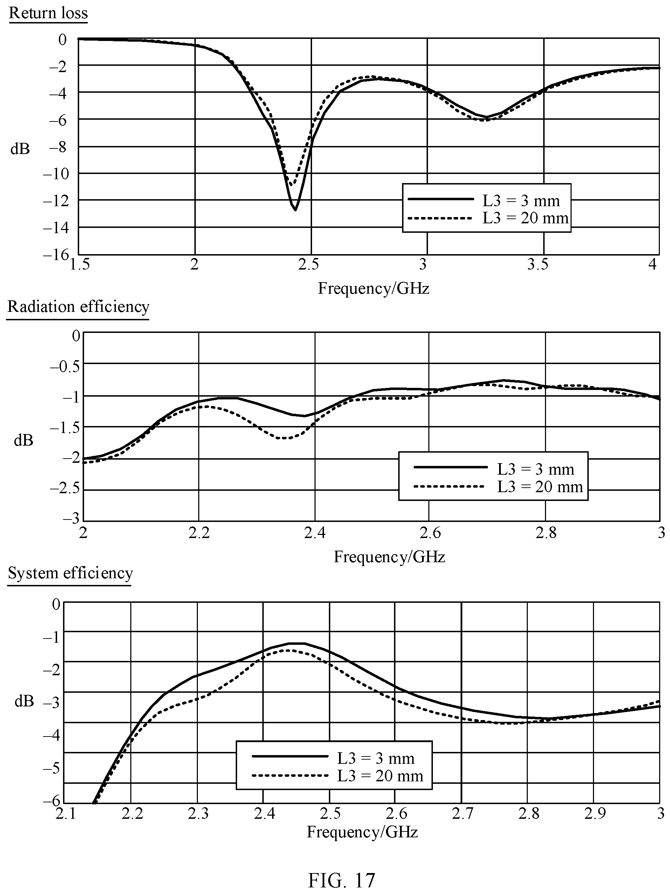

Exemplarily, in combination with the schematic simulation diagram of an S-parameter in FIG. 17, from the perspective of S11, a change in the resonance for L3 to respectively be 3 mm and 20 mm is not large. From the perspective of the radiation efficiency and the system efficiency, it can be seen that after L3 increases, that is, after the third radiator is far away from the first radiator, the efficiency decreases to different degrees.

Therefore, in a specific implementation, the distance between the third radiator and the first radiator may be set in a state of being relatively close to each other, which is more conducive to improving the radiation performance of the antenna. It can be understood that, in a case that the distance between the third radiator and the first radiator decreases to 0, the antenna structure shown in FIG. 6 is obtained. Correspondingly, in a case that the third radiator and the first radiator are far away from each other, a relatively good radiation performance can be ensured as long as a maximum length of the antenna formed by the third radiator and the first radiator does not exceed a ½ wavelength of the operating frequency band.

The foregoing descriptions are based on an example in which the open end of the L-shaped gap of the choke structure is away from the MNG antenna and the non-open end is close to the MNG antenna. In other implementations, the open end of the L-shaped gap may also be disposed close to the MNG antenna, and correspondingly, the non-open end may be disposed away from the MNG antenna. The open end of the L-shaped gap may correspond to an opening at a tail end of a gap arm, of the L-shaped gap, perpendicular to a straight line where the MNG antenna is located. Correspondingly, the non-open end may correspond to a closed tail end of a gap arm, of the L-shaped gap, parallel to the straight line where the MNG antenna is located.

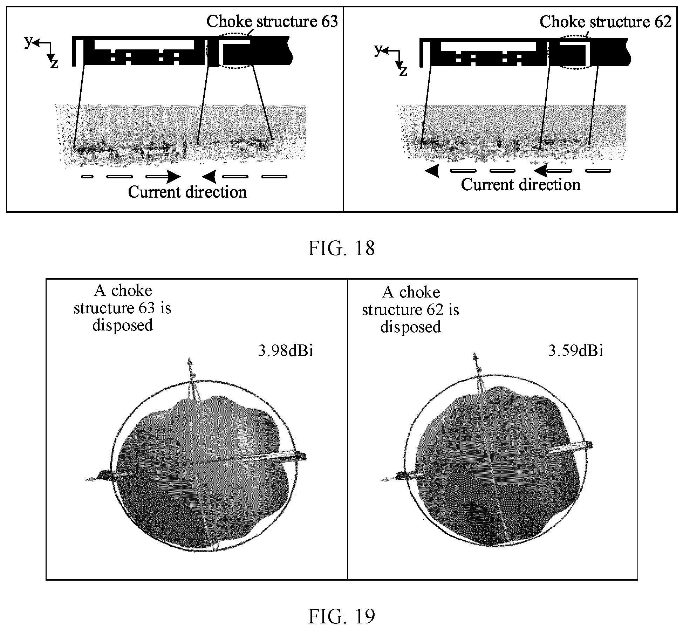

Exemplarily, referring to FIG. 18, in a case that the open end of the L-shaped gap is disposed close to the MNG antenna and the non-open end is disposed away from the MNG antenna, a choke structure 63 may also be correspondingly obtained. A comparative description is provided still separately from the perspective of optimizing the maximum gain and the perspective of increasing the radiation performance of the antenna.

As shown in FIG. 19, in both cases, the maximum gain is apparently optimized. The maximum gain corresponding to the choke structure 62 is set to 3.59 dBi, and the maximum gain corresponding to the choke structure 63 is set to 3.98 dBi. It can be seen that, in a case that the non-open end of the L-shaped gap is away from the MNG antenna, the corresponding choke effect is slightly weakened. However, compared with the 7.4 dBi in the case in which the choke structure is not disposed, a significant optimization effect is still obtained.

Continuously in combination with FIG. 18, distribution of currents on the antenna radiator varies in the both cases. Exemplarily, in a case that the choke structure 62 is disposed, currents in a same direction may be distributed on the first radiator and the second radiator. In the case of the choke structure 63, reverse currents may be distributed on the first radiator and the third radiator. It may be understood that, the two modes corresponding to currents in a same direction have a better superposition effect in space, and the two modes corresponding to the reverse currents have a relatively poor superposition effect in space, and a case of local cancellation may even occur.

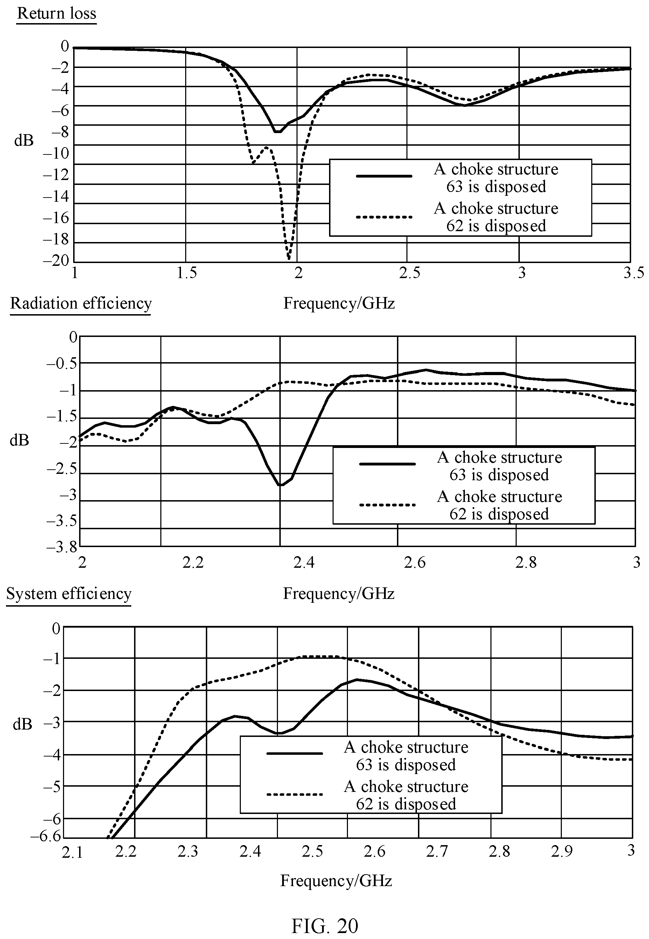

In combination with the schematic simulation diagram of the S-parameter shown in FIG. 20, it can be seen that, from the perspective of S11, during disposition of the choke structure 62, the ¼ wavelength gap mode can be better fused with the main resonance, to form an apparent bandwidth extension. Correspondingly, during disposition of the choke structure 63, the ¼ wavelength gap mode is poorly fused with the main resonance, which is reflected in that a depth of the main resonance is also affected as a result of wave return loss. From the perspective of the radiation efficiency and the system efficiency, during disposition of the choke structure 63, the efficiency is reduced to various degrees. Therefore, during a specific implementation, in a case that the radiation performance of the antenna needs to be optimized while optimizing the maximum gain, the choke structure 62 in which the open end of the L-shaped gap is away from the MNG antenna and the non-open end is close to the MNG antenna may be selected. In other scenarios, in a case that the main requirement is to optimize the maximum gain, the choke structure 63 in which the open end of the L-shaped gap is disposed close to the MNG antenna and the non-open end is away from the MNG antenna may be selected.

In addition, in the foregoing example, the MNG antenna may be disposed at a tail end of the long edge of the tablet computer. In this case, the effect of choking the traveling wave currents can be achieved by disposing the choke structure at one end of the MNG antenna. In some other implementations, the MNG antenna may alternatively be disposed at other positions of the long edge of the tablet computer, for example, at a position close to a center of the long edge. In this way, choke structures may be provided at two ends of the MNG antenna, respectively, to implement suppression of the traveling wave currents on two sides.

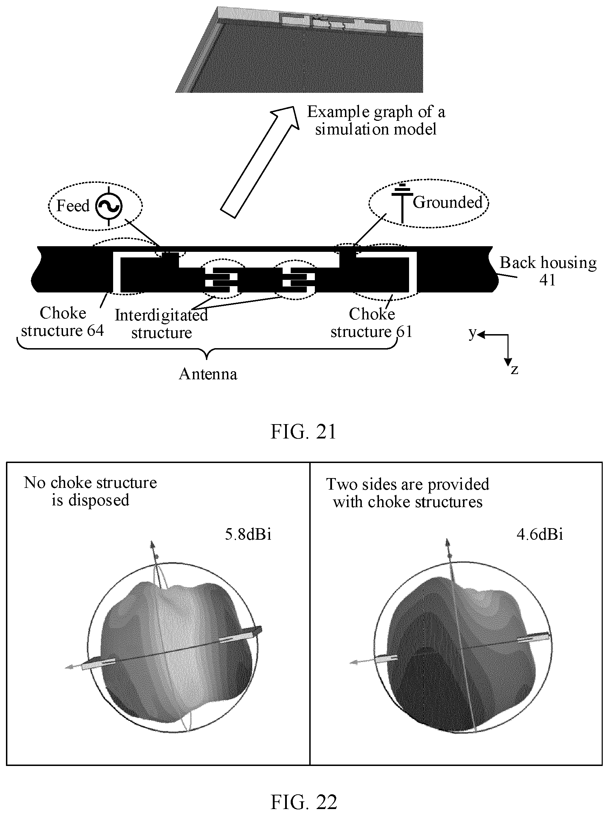

Exemplarily, in combination with FIG. 6, and referring to FIG. 21, at the other end of the MNG antenna other than the end provided with the choke structure 61, a choke structure 64 may be disposed. For setting requirements and related selection of the choke structure 64, reference may be made to the implementation of any choke structure in the foregoing examples. In this example, the L-shaped gap in the choke structure 64 is enclosed by a fourth radiator and the reference ground. The fourth radiator may be connected to the first radiator at the feed. The non-open end of the L-shaped gap of the choke structure 64 may be disposed close to the first radiator, and the open end of the L-shaped gap may be disposed away from the first radiator and the reference ground. As a result, suppression of the traveling wave currents can be implemented at two sides of the MNG antenna, so that the radiation performance of the antenna can be optimized, while optimizing the maximum gain. As shown in FIG. 22, after the choke structure 61 and the choke structure 64 are added, the maximum gain is optimized from 5.8 dBi to 4.6 dBi. Therefore, even if the main radiation structure is not disposed at the tail end of the long edge, the effect of optimizing the maximum gain can still be achieved by adding the choke structure. The improvement effect of the choke structure on the radiation performance is similar to that in the foregoing examples, and reference to each other may be made.

In the foregoing examples, descriptions are provided by using an example in which a choke structure is disposed on one side or choke structures are disposed on two sides of the MNG antenna, so as to optimize the maximum gain and improve the radiation performance. In some other implementations of this application, a similar choke structure may also be disposed near another antenna, to perform a similar function.

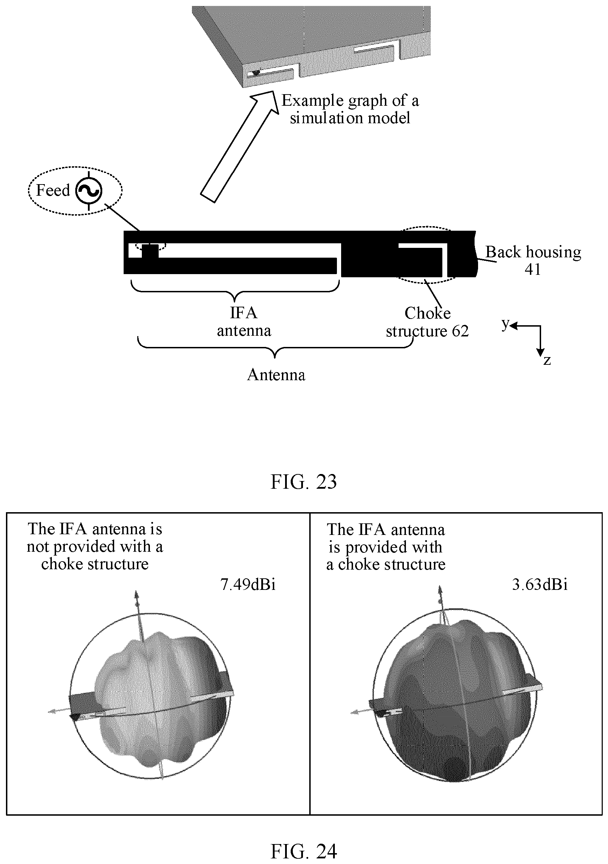

Exemplarily, in some embodiments, the choke structure 61, the choke structure 62, or the choke structure 64 may be disposed on one side or two sides of an IFA antenna, so as to suppress traveling wave currents generated by the IFA antenna, optimize a maximum gain (for example, reduce the maximum gain), and improve the radiation performance. FIG. 23 illustrates an implementation in which a choke structure is disposed near an IFA antenna. For example, the choke structure is the choke structure 62 in the foregoing example. In this example, the IFA antenna may be described as: the IFA antenna may include a radiator, one end of the radiator is provided with a feed or a grounding point, and the other end of the radiator is suspended (hereinafter referred to as an open end). The radiator is further provided with a grounding point or a feed. Exemplarily, in a case that the feed is disposed at a tail end of the radiator, a grounding point may be further disposed on a radiator near the feed. In a case that the grounding point shown in FIG. 23 is disposed at the tail end of the radiator, a feed may be further disposed on a radiator near the grounding point. Therefore, radiation of the IFA antenna is implemented. In this example, one side (for example, the side of the open end) of the IFA antenna may be provided with the choke structure 62. The choke structure 62 may be described as: including a radiator that is not connected to the radiator of the IFA antenna.

A side of the radiator near the IFA antenna is grounded. The other side of the radiator is suspended. Therefore, the radiator of the choke structure 62 may enclose a semi-closed inverted L-shaped gap with the reference ground (for example, the back housing 41). A non-open end of the semi-closed inverted L-shaped gap may be disposed facing the IFA antenna, that is, close to the IFA antenna. Correspondingly, the open end of the semi-closed inverted L-shaped gap may be disposed away from the IFA antenna.

By the antenna scheme provided with the choke structure 62 shown in FIG. 23, the traveling wave currents generated on the reference ground during operation of the IFA antenna can be effectively suppressed, so as to optimize the maximum gain. Exemplarily, referring to FIG. 24, in a case that the IFA antenna is not provided with the choke structure, the maximum gain may reach 7.94 dBi. Correspondingly, after the choke structure (for example, a choke structure 62) is added, the maximum gain is reduced to 3.63 dBi. In addition, based on the simulation results of the direction pattern, the distribution of gains in all of the directions is more uniform, thereby having a better isotropic characteristic. It should be noted that in the examples in FIG. 23 and FIG. 24, for example, descriptions are provided by illustrating that choke structure is provided with the choke structure 62 in the foregoing example. In other implementations of this application, the choke structure disposed near the IFA antenna may also have any implementation in the foregoing examples, and a corresponding beneficial effect can be obtained.

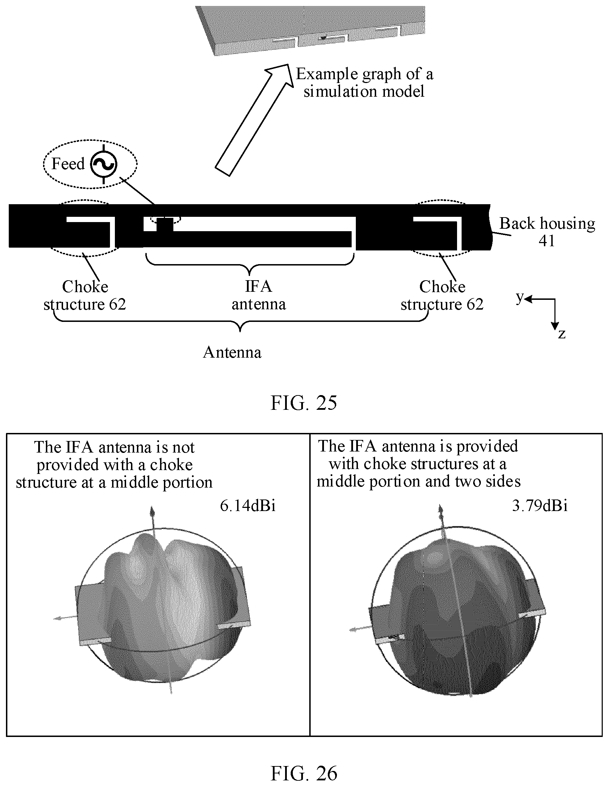

Exemplarily, choke structures may be disposed at two sides of the IFA antenna to implement suppression of the traveling wave currents at two sides. For example, referring to FIG. 25, in a case that the IFA antenna is disposed at a position where the long edge of the electronic device is located other than the two ends (for example, a middle position), significant traveling wave currents are generated to both left and right sides during operation of the IFA antenna. As shown in FIG. 25, choke structures (for example, choke structures 62) may be disposed at two ends of the IFA antenna, respectively, so as to implement suppression of the traveling wave currents on two sides, so as to optimize the maximum gain. For example, FIG. 26 is a schematic simulation diagram of a direction pattern of the antenna having the composition shown in FIG. 25 during operation. In addition, a direction pattern before the choke structure is disposed is provided as a comparison. It can be seen that, in a case that the IFA antenna is centrally disposed, in a case that no choke structure is disposed, the maximum gain reaches 6.14 dBi. Correspondingly, after choke structures (for example, choke structures 62) are added on two sides, the maximum gain is reduced to 3.79 dBi. In addition, based on the simulation results of the direction pattern, the distribution of gains in all of the directions is more uniform, thereby having a better isotropic characteristic.

It should be understood that the choke structure provided in this embodiment of this application may be applied to more scenarios, so as to suppress traveling wave currents generated by a corresponding antenna, thereby optimizing a maximum gain and improving the radiation performance.

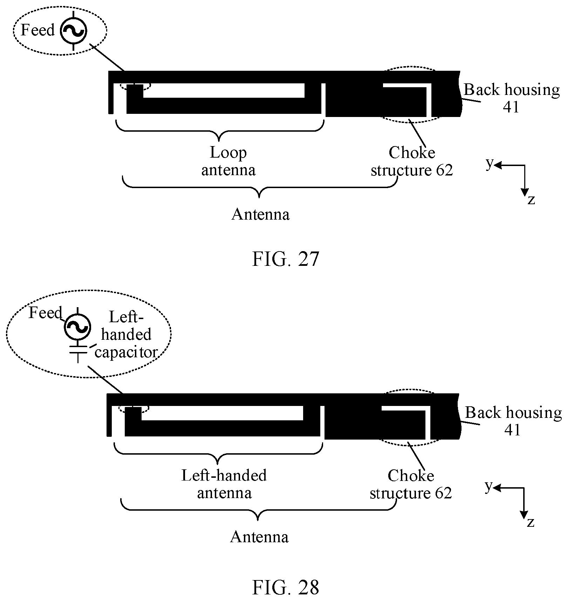

Exemplarily, in some embodiments, FIG. 27 shows an example in which a choke structure is added on a side of a loop antenna (Loop antenna). As shown in FIG. 27, the loop antenna may include a radiator, one end of the radiator is provided with a feed, and the other end thereof is provided with a grounding point. In this example, for example, the choke structure has the composition of the foregoing choke structure 62. Therefore, the choke structure 62 can optimize the traveling wave currents pointed to the direction of the choke structure during operation of the loop antenna, thereby optimizing the maximum gain of the antenna and improving the radiation performance of the antenna.

In some embodiments, FIG. 28 illustrates an example in which a choke structure is added on a side of a left-handed antenna (a CRLH antenna). As shown in FIG. 28, the left-handed antenna may include a radiator, one end of the radiator is provided with a feed, and the feed may be connected to the radiator by using a left-handed capacitor. The left-handed capacitor may be a small capacitor (for example, a capacitor less than 5 pF), for exciting a left-handed mode on the radiator. The other end of the radiator is grounded. The structure of the left-handed antenna related in this example may be referred to in CN 201380008276.8 and CN 201410109571.9. In the example in FIG. 28, for example, the choke structure has the composition of the foregoing choke structure 62. Therefore, the choke structure 62 can optimize the traveling wave currents pointed to the direction of the choke structure during operation of the left-handed antenna, thereby optimizing the maximum gain of the antenna and improving the radiation performance of the antenna.

It should be noted that the foregoing choke structures for the IFA antenna, the loop antenna, and the left-handed antenna are only examples, and in other implementations, disposition of the choke structure may also be referred to in the foregoing disposition manner based on the MNG antenna, and details are not described herein again.

## Claims

1. A terminal antenna, wherein the terminal antenna is configured to be disposed in an electronic device, and the terminal antenna comprises: a first radiator and a second radiator; a total length (L2) of the first radiator and the second radiator does not exceed a ½ wavelength of an operating frequency band of the terminal antenna
a first end of the first radiator is provided with a feed, and a second end of the first radiator is connected to a reference ground; at least two gaps run through the first radiator, wherein the gaps are interdigitated structures; and
the second radiator is arranged on a side of the first radiator, the second radiator is L-shaped, the second radiator and the reference ground enclose an inverted L-shaped first gap, and a non-open end of the first gap is close to the first radiator;
the second radiator is separated from the first radiator by a second gap, a smaller width (L3) of the second gap indicates a higher efficiency of the terminal antenna in the operating frequency band.

2. The terminal antenna according to claim 1, wherein a length of the first gap is determined according to a ¼ wavelength of an operating frequency band of the terminal antenna.

3. The terminal antenna according to claim 1, wherein during operation of the terminal antenna, a zero-order mode excited by the first radiator corresponds to a first resonance, a ¼ mode excited by the first gap corresponds to a second resonance, the second resonance at least partially coincides with the first resonance, and a central frequency point of the second resonance is lower than the first resonance.

4. The terminal antenna according to claim 1 or 2, wherein the second radiator is configured to suppress a traveling wave current generated on the reference ground along a direction from the first radiator to the second radiator during operation of the first radiator.

5. The terminal antenna according to claim 1 or 2, wherein the terminal antenna further comprises a third radiator, the third radiator and the second radiator are respectively disposed on two sides of the first radiator, the third radiator and the reference ground enclose an inverted L-shaped third gap, and a non-open end of the third gap is disposed close to the first radiator.

6. The terminal antenna according to claim 5, wherein the third gap and the first gap are disposed asymmetrically with respect to the first radiator.

7. The terminal antenna according to claim 5, wherein a total length of the third radiator, the first radiator, and the second radiator does not exceed a ½ wavelength of the operating frequency band of the terminal antenna.

8. An electronic device (400), wherein the electronic device (400) comprises an all-metal back housing (41), the all-metal back housing (41) is provided with a window structure, and the terminal antenna according to any one of claims 1 to 7 is provided in the window structure.

9. A terminal antenna, wherein the terminal antenna is configured to be disposed in an electronic device, and the terminal antenna comprises: a first radiator and a second radiator; a total length (L2) of the first radiator and the second radiator does not exceed a 1/2 wavelength of an operating frequency band of the terminal antenna;
a first end of the first radiator is provided with a feed, and a second end of the first radiator is connected to a reference ground;
at least two gaps run through the first radiator, wherein the gaps are interdigitated structures;
the second radiator is arranged on a side of the first radiator, the second radiator is L-shaped, the second radiator and the first reference ground enclose an inverted L-shaped first gap, and a non-open end of the first gap is close to the first radiator; wherein
the second radiator is at the first end or the second end of the first radiator, and is connected to the first radiator.

10. The terminal antenna according to claim 9, wherein during operation of the terminal antenna, a zero-order mode excited by the first radiator corresponds to a first resonance, a ¼ mode excited by the first gap corresponds to a second resonance, the second resonance at least partially coincides with the first resonance, and a central frequency point of the second resonance is lower than the first resonance.

11. The terminal antenna according to claim 9, wherein the terminal antenna further comprises a third radiator, the third radiator and the second radiator are respectively disposed on two sides of the first radiator, the third radiator and the reference ground enclose an inverted L-shaped third gap, and a non-open end of the third gap is disposed close to the first radiator.

12. The terminal antenna according to claim 9, wherein the third gap and the first gap are disposed asymmetrically with respect to the first radiator.

13. The terminal antenna according to claim 11, wherein a total length of the third radiator, the first radiator, and the second radiator does not exceed a ½ wavelength of the operating frequency band of the terminal antenna.

## Patentansprüche

1. Eine Terminalantenne, wobei die Terminalantenne dafür vorgesehen ist, in einem elektronischen Gerät angeordnet zu werden, und die Terminalantenne umfasst: einen ersten Strahler und einen zweiten Strahler; die Gesamtlänge (L2) des ersten Strahlers und des zweiten Strahlers überschreitet nicht eine ½ Wellenlänge eines Betriebsfrequenzbands der Terminalantenne
Ein erstes Ende des ersten Strahlers ist mit einer Speisung versehen und ein zweites Ende des ersten Strahlers ist mit einer Referenzmasse verbunden; mindestens zwei Durchbrüche verlaufen durch den ersten Strahler, wobei die Durchbrüche als kammartige Strukturen ausgeführt sind; und
Der zweite Strahler ist an einer Seite des ersten Strahlers angeordnet, der zweite Strahler ist L-förmig, der zweite Strahler und die Referenzmasse umschließen einen invertiert L-förmigen ersten Spalt, und ein nicht-offenes Ende des ersten Spaltes liegt nahe am ersten Strahler;
Der zweite Strahler ist vom ersten Strahler durch einen zweiten Spalt getrennt, eine kleinere Breite (L3) des zweiten Spalts zeigt eine höhere Effizienz der Terminalantenne im Betriebsfrequenzband an.

2. Terminalantenne nach Anspruch 1, wobei die Länge des ersten Spalts entsprechend einer ¼ Wellenlänge eines Betriebsfrequenzbands der Terminalantenne bestimmt ist.

3. Terminalantenne nach Anspruch 1, wobei beim Betrieb der Terminalantenne eine durch den ersten Strahler angeregte Nullte-Ordnung-Mode einer ersten Resonanz entspricht, eine durch den ersten Spalt angeregte ¼-Mode einer zweiten Resonanz entspricht, die zweite Resonanz zumindest teilweise mit der ersten Resonanz überlappt und ein Mittenfrequenzpunkt der zweiten Resonanz unterhalb der ersten Resonanz liegt.

4. Terminalantenne nach Anspruch 1 oder 2, wobei der zweite Strahler dazu konfiguriert ist, einen Wanderwellenstrom zu unterdrücken, der auf der Referenzmasse entlang einer Richtung vom ersten Strahler zum zweiten Strahler während des Betriebs des ersten Strahlers erzeugt wird.

5. Terminalantenne nach Anspruch 1 oder 2, wobei die Terminalantenne ferner einen dritten Strahler umfasst, der dritte Strahler und der zweite Strahler jeweils auf zwei Seiten des ersten Strahlers angeordnet sind, der dritte Strahler und die Referenzmasse einen invertiert L-förmigen dritten Spalt umschließen und ein nicht-offenes Ende des dritten Spalts in der Nähe des ersten Strahlers angeordnet ist.

6. Terminalantenne nach Anspruch 5, wobei der dritte Spalt und der erste Spalt asymmetrisch bezüglich des ersten Strahlers angeordnet sind.

7. Terminalantenne nach Anspruch 5, wobei die Gesamtlänge des dritten Strahlers, des ersten Strahlers und des zweiten Strahlers nicht mehr als eine ½ Wellenlänge des Betriebsfrequenzbands der Terminalantenne beträgt.

8. Eine elektronische Vorrichtung (400), wobei die elektronische Vorrichtung (400) ein Gehäuse mit Ganzmetallrückseite (41) umfasst, das Gehäuse mit Ganzmetallrückseite (41) mit einer Fensterstruktur versehen ist und die Endgeräteantenne gemäß einem der Ansprüche 1 bis 7 in der Fensterstruktur angeordnet ist.

9. Eine Endgeräteantenne, wobei die Endgeräteantenne zur Anordnung in einer elektronischen Vorrichtung vorgesehen ist und umfasst: einen ersten Strahler und einen zweiten Strahler; die Gesamtlänge (L2) des ersten Strahlers und des zweiten Strahlers überschreitet nicht eine 1/2 Wellenlänge eines Arbeitsfrequenzbands der Endgeräteantenne;
Ein erstes Ende des ersten Strahlers ist mit einer Einspeisung versehen und ein zweites Ende des ersten Strahlers ist mit einer Referenzerde verbunden; mindestens zwei Durchbrechungen verlaufen durch den ersten Strahler, wobei die Durchbrechungen ineinandergreifende Strukturen bilden;
Der zweite Strahler ist an einer Seite des ersten Strahlers angeordnet, der zweite Strahler ist L-förmig, der zweite Strahler und die erste Referenzerde umschließen einen inversen L-förmigen ersten Spalt, und ein nicht-offenes Ende des ersten Spalts befindet sich nahe dem ersten Strahler; wobei
der zweite Strahler sich am ersten Ende oder am zweiten Ende des ersten Strahlers befindet und mit dem ersten Strahler verbunden ist.

10. Die Endgeräteantenne nach Anspruch 9, wobei während des Betriebs der Endgeräteantenne ein durch den ersten Strahler angeregter Null-Mode einer ersten Resonanz entspricht, ein durch den ersten Spalt angeregter ¼-Modus einer zweiten Resonanz entspricht, die zweite Resonanz mindestens teilweise mit der ersten Resonanz zusammenfällt und ein zentraler Frequenzpunkt der zweiten Resonanz niedriger ist als der der ersten Resonanz.

11. Die Endgeräteantenne nach Anspruch 9, wobei die Endgeräteantenne ferner einen dritten Strahler umfasst, wobei der dritte Strahler und der zweite Strahler jeweils an zwei Seiten des ersten Strahlers angeordnet sind, der dritte Strahler und die Referenzerde einen inversen L-förmigen dritten Spalt umschließen und ein nicht-offenes Ende des dritten Spalts nahe dem ersten Strahler angeordnet ist.

12. Die Endgeräteantenne nach Anspruch 9, wobei der dritte Spalt und der erste Spalt asymmetrisch bezüglich des ersten Strahlers angeordnet sind.

13. Die Endgeräteantenne nach Anspruch 11, wobei die Gesamtlänge des dritten Strahlers, des ersten Strahlers und des zweiten Strahlers eine ½ Wellenlänge des Betriebsfrequenzbands der Endantenne nicht überschreitet.

## Revendications

1. Une antenne terminale, l'antenne terminale étant conçue pour être disposée dans un dispositif électronique, et comprenant : un premier radiateur et un second radiateur ; la longueur totale (L2) du premier radiateur et du second radiateur ne dépassant pas une ½ longueur d'onde de la bande de fréquence de fonctionnement de l'antenne terminale
une première extrémité du premier radiateur est pourvue d'une alimentation, et une seconde extrémité du premier radiateur est connectée à une masse de référence ; au moins deux fentes traversent le premier radiateur, lesdites fentes formant des structures entrelacées ; et
le second radiateur est disposé sur un côté du premier radiateur, il est en forme de L, le second radiateur et la masse de référence délimitent une première fente en forme de L inversé, et l'extrémité non ouverte de cette première fente est proche du premier radiateur ;
le second radiateur est séparé du premier radiateur par une seconde fente, une largeur plus petite (L3) de cette seconde fente indique une efficacité supérieure de l'antenne terminale dans la bande de fréquence de fonctionnement.

2. L'antenne terminale selon la revendication 1, dans laquelle la longueur de la première fente est déterminée en fonction d'une ¼ longueur d'onde de la bande de fréquence de fonctionnement de l'antenne terminale.

3. L'antenne terminale selon la revendication 1, dans laquelle, lors du fonctionnement de l'antenne terminale, un mode d'ordre zéro excité par le premier radiateur correspond à une première résonance, un mode ¼ excité par la première fente correspond à une seconde résonance, la seconde résonance coïncide au moins partiellement avec la première résonance, et un point de fréquence centrale de la seconde résonance est inférieur à celui de la première résonance.

4. L'antenne terminale selon la revendication 1 ou 2, dans laquelle le second radiateur est conçu pour supprimer un courant d'onde progressive généré sur la masse de référence dans une direction allant du premier radiateur vers le second radiateur lors du fonctionnement du premier radiateur.

5. L'antenne terminale selon la revendication 1 ou 2, dans laquelle l'antenne terminale comprend en outre un troisième radiateur, le troisième radiateur et le second radiateur sont respectivement disposés de chaque côté du premier radiateur, le troisième radiateur et la masse de référence délimitant une troisième fente en forme de L inversé, dont l'extrémité non ouverte est disposée près du premier radiateur.

6. L'antenne terminale selon la revendication 5, dans laquelle la troisième fente et la première fente sont positionnées de manière asymétrique par rapport au premier radiateur.

7. L'antenne terminale selon la revendication 5, dans laquelle la longueur totale du troisième radiateur, du premier radiateur et du second radiateur ne dépasse pas une ½ longueur d'onde de la bande de fréquence de fonctionnement de l'antenne terminale.

8. Un dispositif électronique (400), dans lequel le dispositif électronique (400) comprend un boîtier arrière entièrement métallique (41), le boîtier arrière entièrement métallique (41) est pourvu d'une structure de fenêtre, et l'antenne terminale selon l'une quelconque des revendications 1 à 7 est disposée dans la structure de fenêtre.

9. Une antenne terminale, dans laquelle l'antenne terminale est conçue pour être disposée dans un dispositif électronique, et l'antenne terminale comprend : un premier radiateur et un deuxième radiateur ; la longueur totale (L2) du premier radiateur et du deuxième radiateur ne dépasse pas une demi-longueur d'onde (1/2) de la bande de fréquences de fonctionnement de l'antenne terminale ;
une première extrémité du premier radiateur est pourvue d'une alimentation, et une seconde extrémité du premier radiateur est connectée à une masse de référence ; au moins deux fentes traversent le premier radiateur, ces fentes étant des structures entrelacées ;
le deuxième radiateur est disposé sur un côté du premier radiateur, le deuxième radiateur est en forme de L, le deuxième radiateur et la première masse de référence forment une première fente en forme de L inversé, et une extrémité non ouverte de la première fente est proche du premier radiateur ; dans lequel
le deuxième radiateur se situe à la première ou à la seconde extrémité du premier radiateur, et est connecté à ce dernier.

10. L'antenne terminale selon la revendication 9, dans laquelle, lors du fonctionnement de l'antenne terminale, un mode d'ordre zéro excité par le premier radiateur correspond à une première résonance, un mode ¼ excité par la première fente correspond à une seconde résonance, la seconde résonance coïncidant au moins partiellement avec la première résonance, et la fréquence centrale de la seconde résonance étant inférieure à celle de la première résonance.

11. L'antenne terminale selon la revendication 9, dans laquelle l'antenne terminale comprend en outre un troisième radiateur, le troisième radiateur et le deuxième radiateur étant respectivement disposés de part et d'autre du premier radiateur, le troisième radiateur et la masse de référence formant une troisième fente en forme de L inversé, et une extrémité non ouverte de la troisième fente étant disposée à proximité du premier radiateur.

12. L'antenne terminale selon la revendication 9, dans laquelle la troisième fente et la première fente sont disposées de manière asymétrique par rapport au premier radiateur.

13. L'antenne terminale selon la revendication 11, dans laquelle la longueur totale du troisième radiateur, du premier radiateur et du deuxième radiateur ne dépasse pas une ½ longueur d'onde de la bande de fréquences de fonctionnement de l'antenne terminale.
